# EUROPEAN PATENT APPLICATION

(11) **EP 2 266 683 A2**
(43) Date of publication of application: **29.12.2010**
(21) Application number: 10184236.7
(22) Date of filing: 18.10.2006
(51) Int. Cl.: B01F 1/00, B01F 3/04, C02F 1/52, C02F 3/16, C02F 7/00, F28C 3/06, F28C 3/16

(54) **Apparatus for the cooling and/or condensation and/or aeration and/or mixing of water and its use**

(62) Divisional of application: 06794112.0
(71) Applicant: Waterix Oy, 02270 Espoo (FI)
(72) Inventor: Huhta-Koivisto, Risto, FI-02130, Espoo (FI)
(74) Representative: Söderman, Päivi Karin Lisbeth

(57) **Abstract**

The invention is concerned with an apparatus suitable for cooling and/or condensation and/or aeration and/or mixing of water. It comprises a shaft (4), a propeller (6) to suck water from below and feed it upwards, the said propeller (6) being surrounded by a pipe (24) through which water sucked by the propeller (6) can flow upwards, and the inner diameter of the said pipe (24) being 1.2 to 2.0 times larger than the diameter of the propeller (6), a flange (3) to guide water to the sides, and the diameter of the flange (3) being the same as the diameter of the propeller (6), and a motor (1) that rotates the propeller (6).

## Description

### FIELD OF THE INVENTION

The present invention relates to an apparatus for the cooling and/or condensation and/or aeration and/or mixing of water.

### DESCRIPTION OF THE PRIOR ART

The structure of cooling towers is very complicated and thus expensive. Efficiency is lower than in spray cooling. Cooling wastewater is difficult with cooling towers, and thus they are often used for cooling clean water and heat exchangers are used, making the structure even more complicated and also decreasing efficiency.

Typically, high nozzle pressure is used in spray cooling. There are a large number of nozzles and they occupy a lot of surface area, which is particularly disadvantageous in urban areas. The spray is so strong that extra water escapes from the cooled basin, requiring the addition of water. If the cooled basin is deep, separate mixers are required for mixing the water in the basin. Otherwise, the water sediments and only surface water is cooled down.

The problems in condensation are primarily the same as with cooling. In condensation, water is condensed and/or air is dried when the temperature at the condensation point is higher than the water temperature.

In small-scale treatment plants, the problem often is the additional price caused by several actuators and their demanding control with timings. For instance, a typical batch treatment plant is comprised of an aerator, discharge pump for pure water, return pump for sludge, top and bottom alarm for controls and a hose pump for dosing the chemical. This is expensive and increases the risk of equipment breakdown.

The efficiency of bottom aerators is relatively high, The weaknesses of this method are its high price and need for extensive infrastructure. Increasing capacity afterwards is difficult. Bottom aeration mixes the water in the basin as long as the aeration is on. After the aerator is switched off, mixing stops altogether as well. Separate additional mixers are required, which increases the investment requirements. In fine bubble aeration, the efficiency of the membranes decreases as they harden/wear over time. Exchanging and servicing the membranes is very expensive and takes place every 3-6 years.

In surface aerators, efficiency is often low or modest. The apparatus often has fixtures that get dirty and require maintenance. This is particularly true in aerators with floats. Aerators with a ring-shaped float around the propeller cannot be used for mixing at all if aeration is stopped. (When the direction of flow is reversed, the propeller only sucks in air and no mixing takes place.)

The purpose of this invention is a cooler/condenser that is simpler in structure and has higher efficiency than the prior art.

The purpose of this invention is also to provide an aerator/mixer superior to the prior art.

### BRIEF DESCRIPTION OF THE INVENTION

The present invention is meant for the cooling and/or condensation and/or aeration and/or mixing of water. It is primarily characterised by a shaft and a propeller to suck in water at the bottom and direct it upwards - the said propeller is surrounded by a pipe through which the water sucked by the propeller flows upwards, with the inner diameter of the said pipe being noticeably larger than the diameter of the propeller - a flange to direct water towards the sides and a motor to rotate the propeller.

The preferred embodiments of the invention are presented in the subclaims.

In addition, the invention relates to the unit's use as an aerator as a part of the process of pumping water to be processed to the preceding and/or next tank and/or pipe and its use for removing phosphorus, wherein the spray produced by the unit is allowed to hit a solid piece containing chemicals necessary for removing phosphorus, the said chemicals dissolving gradually as the spray hits the said object.

The invention makes use of a loose suction pipe whose inner diameter is considerably larger than the diameter of the propeller, which minimises flow resistance. Typically, corresponding apparatus has a cone that flares out downwards at least at the lower end of the pipe in order to minimise flow resistance. This reduces the friction of the flow and thereby energy consumption. Often the upper end of the pipe, i.e. the discharge end, also has a cone that flares out upwards. This also reduces friction and thereby energy consumption. However, the structure described above is relatively expensive. In the apparatus of the invention, the pipe is loose throughout, minimising the friction of the flow both when the water/fluid enters the pipe, is in the pipe, and exits the pipe. The structure is also simple, as the diameter of the pipe is consistent throughout or it only has an expansion for a sleeve.

Other advantages of a loose pipe are its clog-free construction and prevention of seizure. Even large objects may pass between the propeller and the inner wall of the pipe so that the propeller does not "seize" and stop the entire apparatus. When the pipe is "tight" at the propeller or the clearance is a maximum of a few millimetres to a few centimetres, the risk of "seizure" exists, especially in the case of wastewater.

At the upper end of a loose pipe, water is able to discharge to the sides with e.g. a rotating disc or centrifugal vanes as energy-efficiently as possible. A steep bend after a "tight" curve would cause a loss of energy.

In the present invention, the inner diameter of the loose pipe is typically 1.2 to 2.0 times that of the propeller diameter.

Experiments have shown that this did not have a substantial effect on efficiency compared to an apparaturs where the lower end of the suction pipe was a downward expanding cone (such as in the prior art in general) and the inner diameter of the pipe at the propeller is only a few millimetres larger than the propeller diameter (such as in the prior art in general).

The advantages gained by using oversized pipe in accordance with the invention are, however, obvious. The structure of the apparatus's lower section is considerably simplified compared to the pipe in accordance with the prior art - in order to minimise flow resistance, there is traditionally a cone at the lower end of the suction pipe and often also an upward expanding cone above the propeller - and this reduces manufacturing costs as well as decreases the amount of assembly work. The lower section of the apparatus is now loose also at the propeller and even large objects carried with the water do not obstruct the pump or get caught between the suction pipe and the propeller, which would easily stop the propeller from rotating and thus the operation of the apparatus as a whole.

The advantages of a solution in accordance with the invention are obvious. The structure is simple and cheap to realise. Above all, its advantage is easiness, allowing the customer to buy the suction pipe(s) and install it at the installation site. The customer only needs to saw the suction pipe to a suitable length and thereafter attach the suction pipe using only a screwdriver, for example. Pipes are available from all plumbing equipment shops, and their form and diameter vary only slightly (a few centimetres). Therefore, pipes may be acquired locally, even if their diameters vary somewhat. This applies to both Finland and abroad.

The invention provides an effective method of pumping water with a propeller upwards and guiding it to the sides with a flange that is crosswise to the flow. The flange directs the water spray to the sides, thereby guiding the water spray to a large area. The water spray effectively takes air with it, creating a stong air flow away from the cooler/condenser. The mixing of air and water takes place effectively in a large area, cooling the water or condensing water from the air. The efficiency of the apparaturs may be increased further with a rotating flange or vanes, guiding the water even more effectively to the sides (to a larger area). The suction pipe may also be used in deep basins to cool the water up to the bottom of the basin, thanks to the mixing.

Even though the apparatus according to the invention primarily sprays water to the sides, it rises somewhat above the water surface. This phenomenon may be exploited in small-scale treatment plants by using the apparatus for aeration and pumping simultaneously and also for dissolving the phosphorus precipitant chemical.

When the apparatus is used for aeration, of particular importance are both the strong flow from the centre of the apparatus outwards caused by the pumping to the bottom water and a spray directing to the sides that increases the said flow. In addition, the spray settles in a broad area. Most of the aeration takes place in the bottom water.

When the invention is used for cooling, its purpose is to create a simple structure with good efficiency, particularly compared to cooling towers, and make it possible to cool down deep basins without any additional mixing. The apparatus of the invention may also be used for cooling liquids with dirt particles, without the apparatus getting dirty, thereby dispensing with separate heat exchangers. The matters mentioned above also apply to condensation and dehumidification.

When the invention is used in small-scale treatment plants, its purpose is to serve as an aerator and a pump simultaneously. As the number of apparatuses to be controlled decreases, controlling the small-scale treatment plant also becomes significantly easier. The factors mentioned above result in a cost-efficient and reliable solution.

The purpose of the invention in aeration is to work at a high efficiency and thereby result in savings in energy. The same apparatus may be used for both aeration and mixing at the same time, or only for mixing.

The advantage of the invention is that its structure may be very simple while still achieving good performance.

The following will discuss the invention in detail with references to exemplary embodiments in the attached figures; however, the scope of the invention is not limited to their details.

The apparatus also works with liquids other than water. Therefore, in descriptions of the apparatus, the term "water" refers to "water or other liquid".

### FIGURES

Figure 1 presents the apparatus of the present invention in general.
Figure 2 presents the apparatus of the invention in water, the said figure also portraying water flows.
Figure 3a presents the apparatus of the invention in water, the said figure also portraying the meeting of water and air.
Figure 3b presents the same as Figure 3a, but with an additional fan for adding dry air. Figure 3b presents the same as Figure 3a, but with an additional fan for removing humid air.
Figures 4a - 4b present the apparatus of the invention, with a presentation of the apparatus's fixtures.
Figure 5 presents the apparatus of the invention where the lower section of the apparatus is surrounded by an oversized pipe.
Figures 6a - 6b present the apparatus of the invention where the suction pipe of the apparatus is comprised of a flexible tarpaulin pipe.
Figure 7 presents the use of the apparatus of the invention in a wastewater treatment plant.
Figure 8 presents the apparatus of the invention with float modules.
Figure 9 presents another kind of apparatus of the invention with float modules.

### DETAILED DESCRIPTION

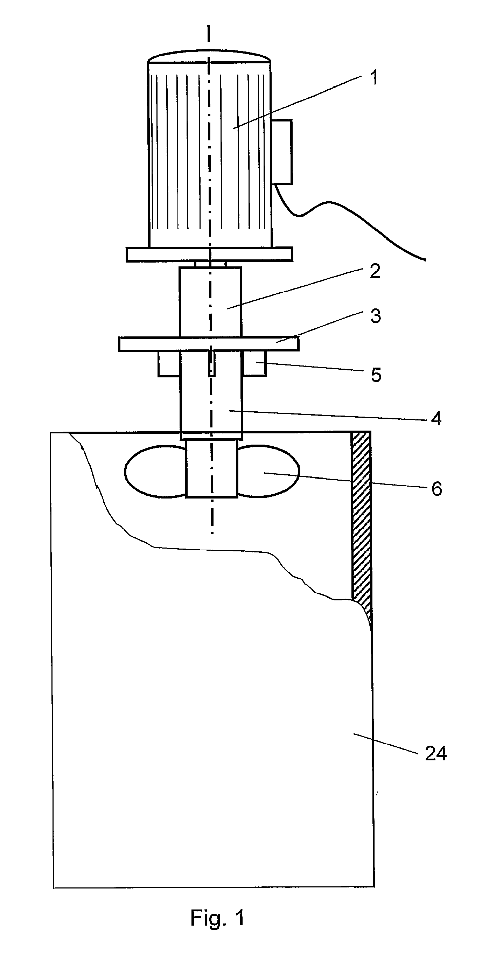

An embodiment of the invention is presented in Figure 1. The apparatus of the invention is comprised of a motor (1), coupling sleeve (2), shaft/sleeve (4), flange (3) and propeller (6). The propeller (6) raises water from below and pushes it further upwards parallel to the shaft (4). The flange (3) effectively guides the water to the sides, creating a water spray that settles on a large surface area and has high volume (mix of air and water drops). Ambient air and water are effectively mixed in the turbulent spray. Bottom water also flows strongly away from the apparatus and is in turbulence in the water. Thus, air and bottom water are in thorough contact with each other. Both drops and air are effectively led to the bottom water.

The lower section of the pipe is surrounded with an oversized pipe, i.e. a pipe (24) whose inner diameter is considerably greater than the diameter of the propeller (6), 1.2 to 2.0 times the diameter of the propeller. On the contemplated scale, it means practically that it is e.g. 4 to 10 centimetres larger.

The sideward spray may be intensified with a rotating flange (3) and rotating sleeve (4), which makes for a non-contaminating structure, as these parts prevent dirt from accumulating in the apparatus structure. The flange (3) and sleeve (4) may be either rotating or stationary. In an embodiment where parts 3 and 4 are rotating, centrifugal force tries to throw all dirt particles outwards. The diameter of the sleeve (4) must be large enough so that e.g. hair will not accumulate around it. If, for instance, the diameter of the sleeve is 10 cm/rr, i.e. more than 3.2 cm, it will prevent hair of 10 centimetre length from accumulating. The rotating structure increases the direction of the spray to the sides (360°) by way of centrifugal force, and creates a stronger flow / turbulence of the bottom water. These increase the performance values of the apparatus.

Figure 1 includes vanes (5), which further intensify the direction of the spray to the sides. In a simple embodiment of the invention, the vanes (5) are not necessary. The vanes (5), which as they rotate cause centrifugal force, further intensify the direction of the spray to the sides (360°) and increase the movement of the bottom water to the sides. The vanes (5) suck in water from below and push it to the sides. This somewhat increases the amount of flowing water and decreases friction in the bend where the water coming from below turns to the sides. The energy consumption of the apparatus increases compared to the vaneless embodiment, while also increasing output and efficiency. The structure where the vanes (5) are located below the rotating flange (3) and attached to it has been found to remain very clean due to centrifugal force, but the location of the vanes (5) may also differ. The size, number and form of vanes may also vary because there are no extra gaps in the structure where dirt could accumulate.

The structure of Figure 1 may also be realised by integrating several of the parts 2 to 6 into a single object. This results in cost-saving when manufacturing large batches. Ideally, the propeller (6), vanes (5), coupling sleeve (2), rotating sleeve (4) and rotating flange (3) are integrated into one component, beginning as a propeller pump at the bottom and ending as a centrifugal pump at the top. The integrated component may also include only some of the parts 2 to 6 described above.

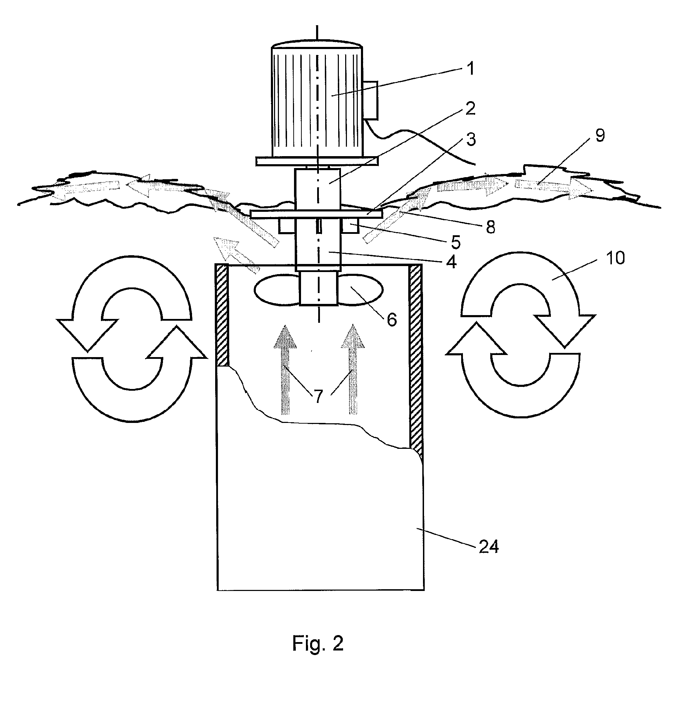

Figure 2 presents the apparatus of the invention in water, the said figure also portraying water flows. The propeller (6) sucks in water from below, which is portrayed by arrows (7) in Figure 2. After this, the water is directed obliquely upwards as indicated by arrows (9). In accordance with Figure 2, the vanes (5) and flange (3) direct the water to the sides above but near the water surface. Arrows (10) indicate that the water is turbulent below the water surface and also the direction of rotation.

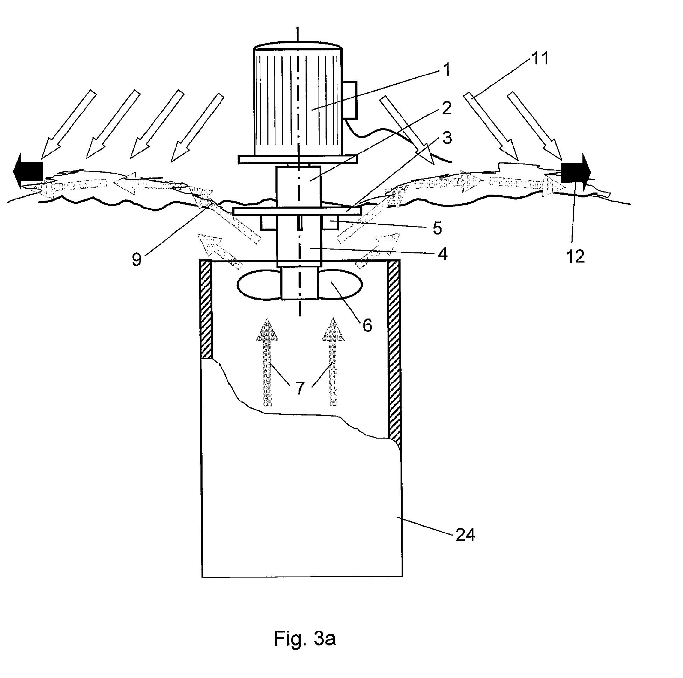

Figure 3a additionally portrays the encounter of dry air (11) and water flow (9) and the water spray. Humid air (12) is discharged to the sides.

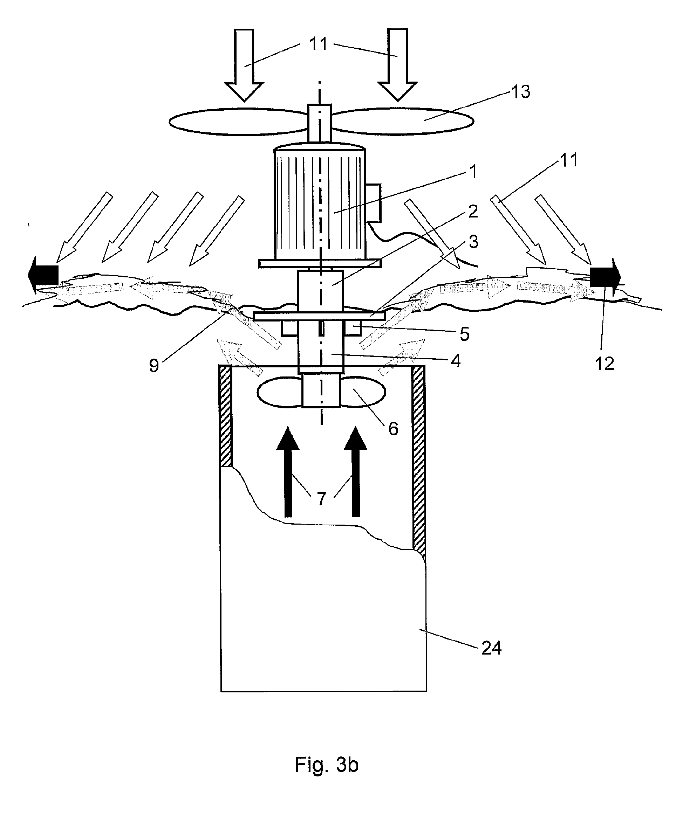

In Figure 3b, dry air 11 is added by way of an additional fan (13).

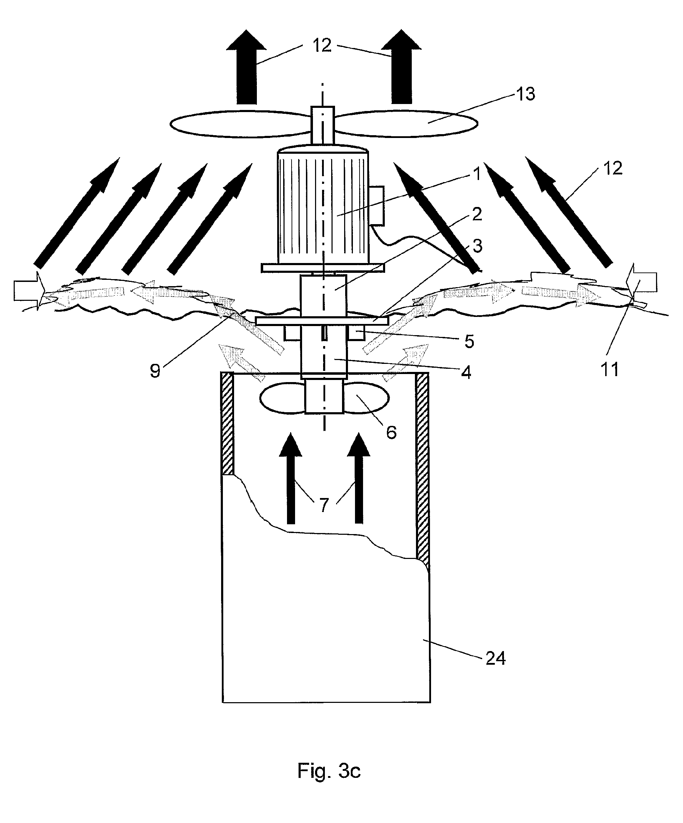

In Figure 3c, the additional fan (13) is used for discharging humid air (12), and dry air (11) is coming from the sides.

When the apparatus is used for cooling/condensing water/humidity, the cooling works so that strong water sprays directed to the sides (360°) encounter the ambient air and take it with them. The power of the water spray is increased by the high volume of recycled water and the dispersion of the spray to a large area (both surface area and volume). A powerful air flow is created from the aerator to the sides (360°). The air flow travels among the water spray and is in strong turbulence with the water spray. Likewise, bottom water is moving strongly and is in contact with the air. Here, water is evaporated into the air, humidifying it. The heat of evaporation required by the evaporating water cools the water down effectively.

Cooling requires dryer and dryer air from the surroundings. The water sprays continuously suck in this dryer air from above the apparatus and from air layers above the water spray. The humid air is discharged to the sides of the aerator.

In some cases, a continuous supply of dryer air needs to be ensured, and here an additional fan may be used, as depicted in Figures 3a and 3b. The additional fan may be located in the upper section of the apparatus engine shaft, or it may have a motor of its own. Dry air may be introduced either from above the apparatus or it may be guided from further away.

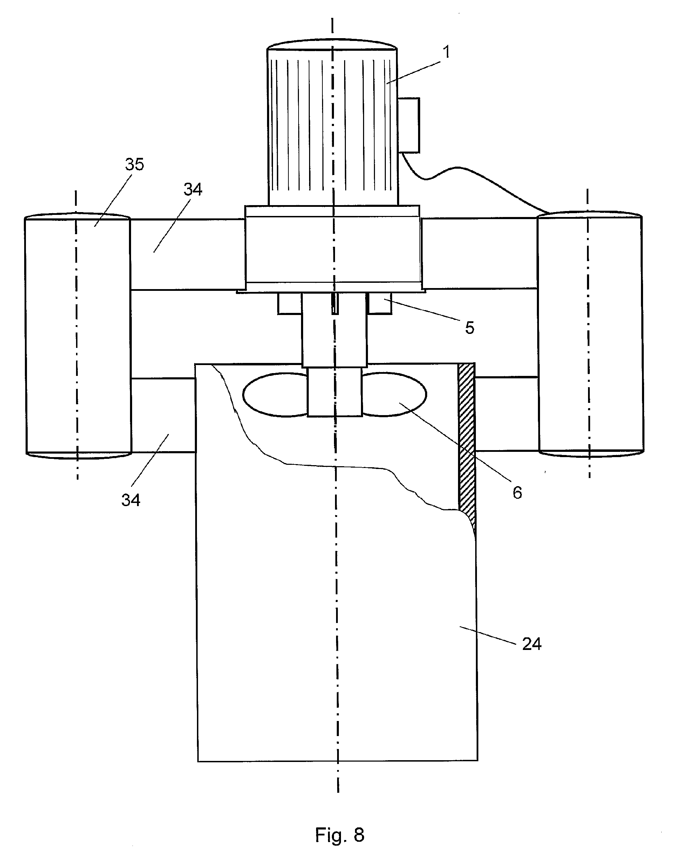

When the apparatus is used for cooling, it may be attached from the engine to the service bridge and/or equipped with floats (Figure 8).

In tests where the apparatus was used for cooling, it achieved the same or superior results as a cooling tower. In other words, the efficiency attained was high. It also has the advantage of a very simple structure compared to traditional cooling towers. The apparatus is easy to use both in natural basins and man-made basins as a part of a cooling system. The system will be cheaper for its users than currently marketed systems - in terms of investments, maintenance and energy consumption.

The apparatus of the invention may also be effectively used for cooling and simultaneous aeration. This applies particularly to pulp and paper mills and sawmills, where currently separate cooling towers are used (without cooling, the temperature of wastewater rises too high for biological treatment to be possible.) In apparatus of the prior art, cooling is followed by the aeration of water at the wastewater treatment plant. However, the apparatus of the invention both cools and aerates water at the same time, using the same apparatus. This results in significant savings in terms of investments as well as energy consumption.

The apparatus functions as a cooler when the temperature of the air dew point is lower than the water temperature.

If the temperature at the dew point is higher than the water temperature, the apparatus functions as described above, but condenses water out of the air. The apparatus may be generally used for e.g. decreasing air humidity and drying moist environments. When the apparatus functions as a condenser, the water temperature increases.

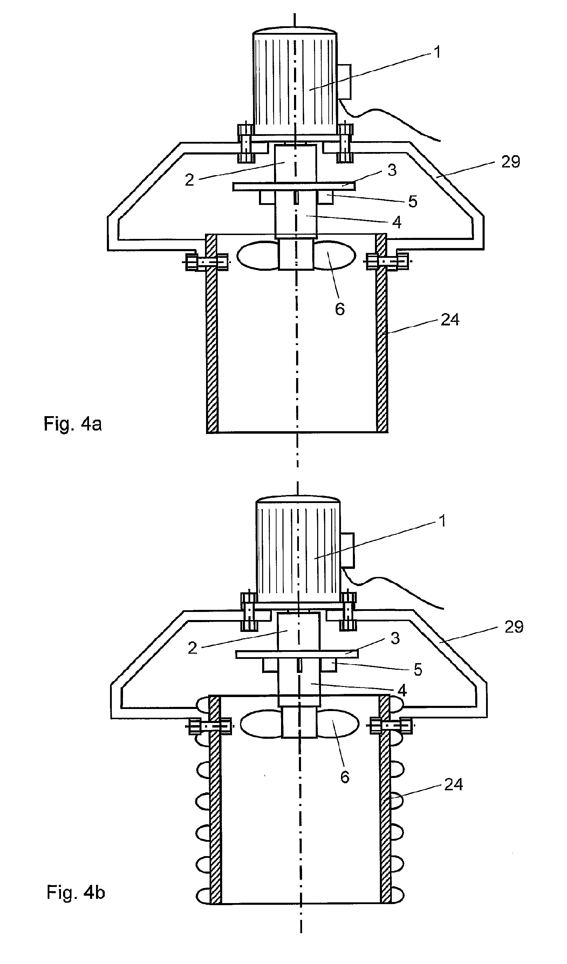

Figures 4a - 4b present the apparatus of the invention with a presentation of the apparatus's fixture handles for attaching it.

Typically, the lower and upper sections of the corresponding apparatus are attached to one another so that the fixtures go through the water spray inside the apparatus or are directly outside the apparatus's sides.

In the solution of the invention, the apparatus is attached so that the fixtures (29) go further away from the apparatus downwards diagonally above the water surface.

Experimentation has indicated that e.g. when the fixtures are 20 cm outside the apparatus's sides, they remained clear (the water was inhomogenous) and the fringe area of the spray was noticeably smaller than in a pin mounting. The water spray permeated the fixtures and dirt stuck to them, but the dirt particles came off over time. When the fixtures were in-between the nozzle rings, as in the prior art, dirt accumulated around the pins used as fixtures and stuck on them. Another alternative is to support the lower and upper section of the apparatus from the basin's side or to a separate support rod.

When the fixtures are attached in accordance with Figures 4a and 4b, two essential improvements are gained compared to current systems. The apparatus will not get blocked, even if there are dirt particles in the wastewater such as paper or hair. Additionally, the water spray is able to fly freely and there are no obstacles to the flow. This reduces the energy consumption of the apparatus and improves its output.

Experiments indicated that if the lower and upper sections of the apparatus were attached to one another with pins (4 pcs., diameter 10 mm) that were located at the point where the spray is formed, such as in apparatus of the prior art, the spray was not distributed evenly at 360°; an approx. 90° fringe area was generated, i.e. there was a sector with no spray whatsoever. As used in the prior art, the pins form a resistance to the flow, and also decrease output. For instance, aeration experiments showed that the larger the surface area in which the water spray landed in the bottom water, the larger the output of aeration. (As much as more than 50% of aeration takes place in the bottom water. If the flow of the bottom water decreases or the surface area of the landing water spray is reduced, the output deteriorates.)

The fixtures of the invention may be so far or form such a large bend that they are completely out of reach of the water spray.

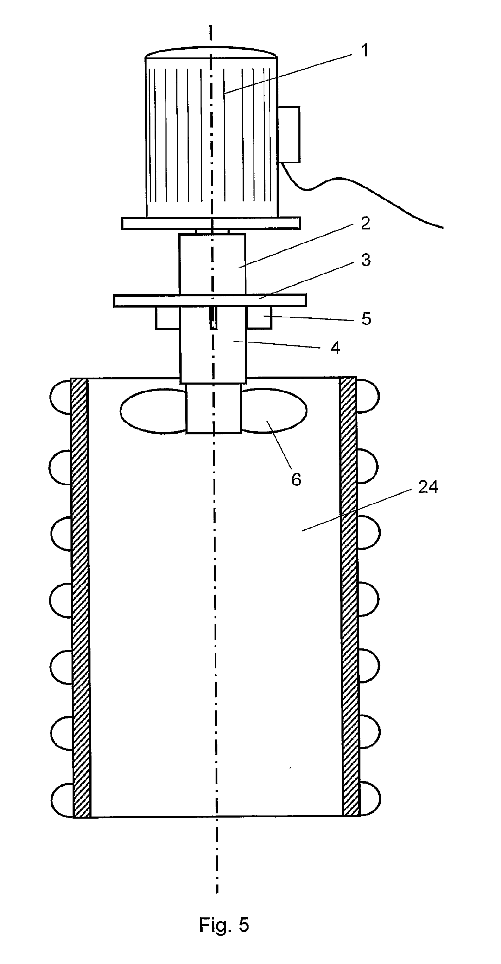

Figure 5 presents the generic apparatus of the invention where the lower section of the apparatus is surrounded by an oversized pipe, i.e. a pipe (24) whose inner diameter is e.g. 4-10 cm larger than the diameter of the propeller (6).

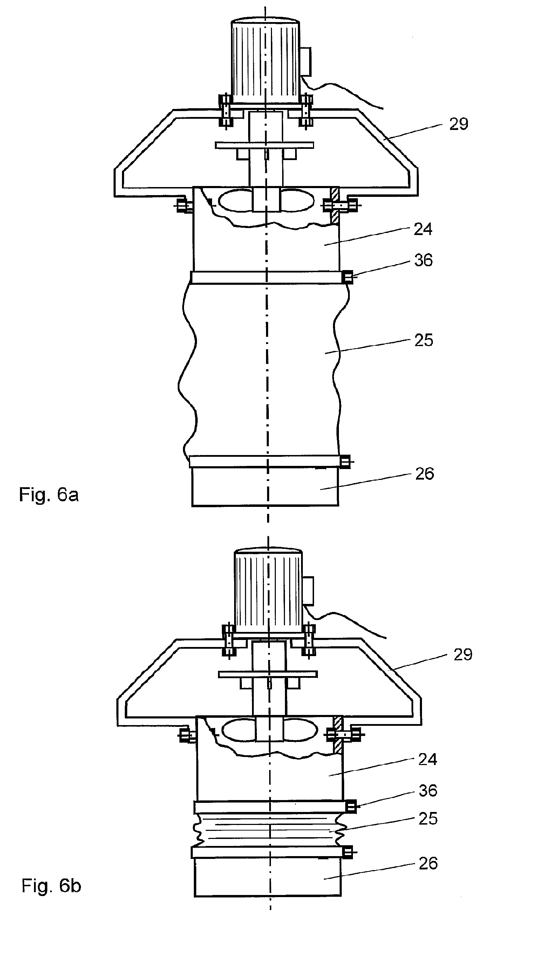

Figures 6a - 6b present the apparatus of the invention where the lower section of the apparatus (suction pipe) has been replaced with a tarpaulin pipe (25). This provides several benefits: the suction pipe (24) becomes noticeably light and easy to transport and install, as the tarpaulin pipe (25) can be folded as necessary e.g. during transport, which is portrayed in Figure 6b. For example: if a 14-metre deep basin or reservoir should be cooled or aerated, a 12-metre suction pipe is required. Transporting one, especially on a lake, is difficult. In order for the tarpaulin to keep its shape, some technical additions to it are necessary. At the top, the tarpaulin is attached to a shorter rigid pipe in accordance with Figure 6. So that the tarpaulin would not rise up as a result of the suction during operation, both a hoop and a weight are attached to the bottom of the tarpaulin. The hoop can also function as the weight, if it is of material that is clearly heavier than water. If the tarpaulin pipe (25) is long, several hoops may be required so that it does not collapse.

The canvas pipe may be of e.g. tarpaulin, stitched to a pipe, or it may be of seamless polyethylene sock (PE-LE), but to a suitable length as necessary.

In Figure 6a the tarpaulin pipe is in the operational position, and in Figure 6b the tarpaulin pipe is put together e.g. for transportation.

In addition, the round support hoop (26), which functions as a weight, may also be attached to the tarpaulin pipe.

In accordance with the invention, the lower section of the apparatus or the suction pipe is made with fixtures, attached to the upper section of the apparatus with e.g. screws or by welding. The fixtures (29) of the lower section are attached by putting them in a groove between the folds of the suction pipe (24) and tightening a cable or hoop (36) to keep them in place. Several plumbing pipes have folds that have a suitable space in-between to support the attachment. If there are no folds in the pipe, the fixtures (29) are attached to the suction pipe with screws or by welding. In order for the structure to be as robust as possible, the fixtures (29) are finally tightened around the suction pipe (24) with a hoop or cable, as described above.

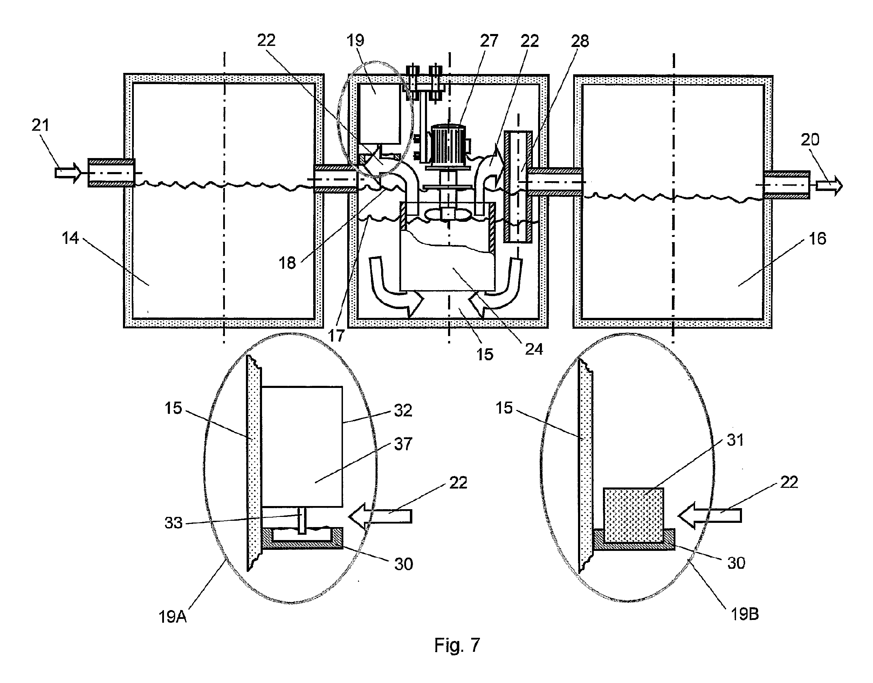

The apparatus may also be used as a pump. An example of this is a small-scale treatment plant, presented in Figure 7.

Typically, small-scale treatment plants of the prior art use bottom aeration and a batch process. After aerobic and anaerobic phases, the clean water is pumped from the surface of the process basin onwards in the process or to a waste channel, and the surplus sludge is pumped from the bottom back to the first tank, which is the depositing tank. This requires two separate pumps and their control in addition to the aeration. The control, with its timings, may be very complicated and expensive in the end. The dosing of the precipitant chemical, used for removing phosphorus from the wastewater, in most cases takes place by dosing liquid chemical into the process tank. This also requires a control of its own.

The apparatus of the invention sprays water 360° around it. Both the sprayed water and the bottom water are effectively aerated. As was presented in connection with Figure 1, the propeller (6) raises water from below and pushes it further upwards parallel to the shaft (4). The flange (3) effectively guides the water to the sides, creating a water spray that settles on a large surface area and has high volume (mix of air and water drops). When water is sprayed in this way, the water spray squirts (is pumped) above the water surface (22). This phenomenon may thus be utilised for pumping. Some of the water is allowed to return to the precipitation well (14) using the pumping effect, which returns some of the surplus sludge from the bottom of the process basin (15). The same pumping (22, 20) may be used for water that exits the process. In this case, the water surface in the process basin lowers gradually and the following benefits are achieved.

As the water surface lowers, the aeration of the water decreases and ultimately ends, when the propeller no longer touches the water (17). (The water is already sufficiently aerated. Bacteria run out of food if aeration is continued even though no more wastewater enters the process.) As the water surface has lowered (17) in the process basin, a buffer for incoming wastewater has been achieved. For instance, if the surface area of the process tank is 2m² and the aerator has pumped the water to a level 10cm lower (17), the size of the buffer is 2001. This is very important so that no water can go through the process without treatment. The figure indicates the upper water limit (18) and lower water limit (17).

As the water is sprayed away from the apparatus, this spray may be used e.g. for dissolving the phosphorus precipitant chemical or dosing a liquid precipitant chemical. The spray (22) rinses a liquid chemical from the top of the stand (30) and mixes it effectively into the wastewater, or doses a suitable amount of dissolved chemical (37). The spray (22) rinses water (30) at the bottom of the cup-like stand, making the water surface fluctuate. When the surface becomes low due to the wiping out of the spray (22), the precipitant chemical flows from the dosing pipe (33) into the stand (30), and is then flushed away with the spray (22) to the process basin (16). The chemical tank (32) is enclosed. The precipitant chemical reacts with the phosphorus, and phosphorus sediments to the bottom of the basins.

If no new wastewater enters the process, the water spray (22) stops after a while as the water surface lowers, and no solid or dissolved precipitant chemical is further dissolved unnecessarily into the water. This makes it possible to automatically avoid the dissolution of too much chemicals into the water.

Wastewater treatment of the invention may also be equipped with a dosing pump of a liquid chemical. The number of basins in a small-scale treatment plant may also vary. The location of process basins may vary as well, and it can be e.g. the last basin.

In summary, it may be stated that due to the arrangement in Figure 7, the number of pumps may be decreased in terms of wastewater transfer and chemical dosing. In addition, the control system is very simple. At best, only a clock is needed for controlling the aerator to guarantee the alternation of the aerobic (when the apparatus is on) and the anaerobic (when the apparatus is off) process phases.

The apparatus in Figure 8 is equipped with a fixed float module (35), which is e.g. passed as a whole against the fixtures (29).

The apparatus may also be equipped with floats, maintaining it at a proper height compared to the water as the water surface height varies. This solution is necessary in e.g. lakes, rivers and equalising basins, making it possible to keep the apparatus at a suitable height regardless of fluctuation in water level. There are preferably three or more floats. The floats may be attached to the apparatus with e.g. screws or by welding. The size and shape of the floats may vary.

Floats and their support structures/fixtures may be used to replace separate fixtures that would keep the lower and upper sections of the apparatus in a suitable position and suitable distance from one another. This solution reduces the number of components and decreases manufacturing costs. The solution is also particularly suitable for smaller apparatuses, as they are still easy to transport even if assembled at the factory. The same applies to larger units as well; however, transportation becomes more difficult. In addition to the aforementioned solution, it is possible that the floats are attached e.g. only to the suction pipe, and the lower and upper sections of the apparatus are attached to one another with separate fixtures, as previously described.

The float may also be constructed so that it has a frame of its own, with an inner diameter larger than the outer diameter of the suction pipe. This results in a modular structure that decreases the number of different apparatuses. In other words, the apparatus is comprised of a lower and an upper section. These are attached to one another in the regular way, resulting in the complete apparatus. It is now ready for use in applications where the apparatus is permanently fixed with regard to water level, e.g. from a base in an engine's side with screws. This is a common situation in e.g. cooling basins or municipal wastewater treatment plants where the water surface is constant or varies only a little (a few centimetres). By fixing the float described above to the top of the suction pipe, the apparatus may be changed into a self-floating model. Savings in storage and logistics are significant, e.g. due to the smaller number of models.

The size and shape of the floats may vary.

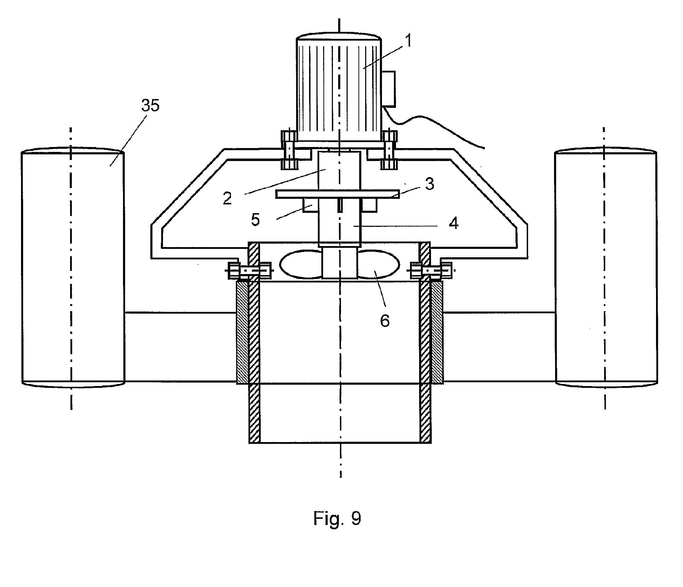

Figure 9 presents another kind of apparatus of the invention, one with float modules (35), the said figure portraying the correct altitude of the apparatus compared to the water level.

If the apparatus is too deep compared to the water surface, the spray to the sides gets weaker and ultimately stops altogether. This leads to reduced efficiency and, ultimately, the ending of the cooling/aeration; only mixing continues.

Using the apparatus of the invention, the efficiency of aeration decreased by 20%-30% when the flange was 10 cm underwater. If the apparatus is lifted upwards, more pumping power is required (when the water spray starts from above the water surface). A flow rate of 3 m/s at the propeller corresponds to a 50 cm-high water column. If the bottom of the flange is at 50 cm above water, twice the amount of pumping power is required. This alone decreases the apparatus's efficiency by 50%. In addition, the water spray does not make the bottom water rotate nearly as effectively as when the spray starts completely or partially underwater. If the apparatus is too high up, the result is considerably low efficiency. The best results are achieved when the flange is near the water surface, and the top of the suction pipe is underwater.

We also state the following general issues concerning the invention:

### Location of propeller

The propeller (6) of the apparatus is in the water below the upper section of the apparatus. The propeller cannot be too high up, as it would then either take air or cavitate. This cuts the pumping power (the amount of water being pumped decreases steeply) and cooling/aeration decreases abruptly, as the spray contains only little water and flies only a short distance. If the propeller of the apparatus is taken deep enough underwater, good results are achieved. However, aeration output increases approximately 20%, as the propeller is brought higher. For example: the aerator was equipped with a 7½" x 7" propeller (diameter 19 cm and rise per revolution 17.8 cm), while the speed of the motor was 900 rpm (theoretical flow rate without slip 2.67 m/s). The output of the aerator increased by 20% when the propeller was 10 cm from the bottom of the upper section of the aerator compared to when it was 15 cm from the bottom of the upper section. On the other hand, when the propeller was moved so that it was 8 cm from the bottom of the upper section, the propeller was already taking air and the aeration output collapsed. Based on this, it is easy to determine that the propeller should be located as high as possible, however, so that it will not take in air or cavitate. The diameter, rise, diameter of hub and rotation speed all have an impact on the distance where the propeller will take in air or start to cavitate. Because of this, each propeller should be tested separately. A propeller that is high gives better results, as in this case the water is more turbulent when it exits the apparatus. This further has the effect that the water flying, i.e. in the spray, is more turbulent and thus more effectively cooled/aerated.

### Description of aeration

The propeller forms a propeller pump; the propeller sucks water from below and raises it above the propeller. There is a rotating flange above the propeller. This guides the water pumped by the propeller to the sides 360° around the aerator. Aeration takes place in several phases:
1. The water rises into the air to the sides from under the rotating flange, gaining air after the edge of the flange ends and forms an ejector.
2. The spray narrows down during the flight, increasing the surface area. The spray continuously meets air during the flight and is aerated.
3. The shower lands in the surrounding water and is aerated upon impact.
4. The surrounding water is aerated when the water spray lands on its surface, bringing air and turbulence to the surface.
5. Aeration is enhanced by the strong flow caused by the spray in the bottom water, which makes the bottom water change constantly. This increases the oxygenation of the water.
6. The flow of the bottom water is further increased in that the lowest part of the spray typically starts underwater, which further increases the flow and adds to the effectiveness of the aeration.

Experiments showed that the aeration was further increased when the upper section of the aerator included vanes. This is because the spraying of the water to the sides is increased by the centrifugal force caused by the vanes. This also increases the changing in the bottom water. Together these increase both output and efficiency. In addition, the suction coming from above reduces the work of the bottom propeller, increases the amount of water being pumped and turns the flow of the water to the sides with little friction (decreases friction in the bend) under the rotating disc.

Based on measurements, approximately one half of aeration takes place in the water being pumped and the rest in the surrounding water. This makes it possible to reach a very high oxygenation value of 16mgO2/litre of pumped water (e.g. degree of saturation of oxygen in 20°C water is 9.1 mgO2/l).

### EXAMPLES

The following illustrates the operation of the invention with a few examples of use.

### EXAMPLE 1

### FLOW RESISTANCE WHEN USING THE APPARATUS OF THE INVENTION

An apparatus of the invention with a 7½" (190 mm) propeller diameter has been tested as an aerator with suction pipes of varying inner diameters. When the inner diameter of the suction pipe was 200 mm, the output of the aerator decreased by 40% compared to an aerator with a suction pipe whose inner diameter was 285 mm. Using a suction pipe with an inner diameter of 380 mm, the output increased by a further 10%. The table below illustrates well how flow resistance decreases as the diameter of the pipe increases.

For instance, a flow rate of 3 m/s in the propeller corresponds to a delivery pressure of 4,500 Pa. A pipe whose diameter is 200 mm (propeller diameter 7½", i.e. 190.5 mm) and length is 6 m is used. The pipe resistance is 1.2, the inlet resistance 0.5 and outlet resistance 1.0 times the delivery pressure. This translates into a total pressure drop pf 2.7 times the delivery pressure (original delivery pressure = effective pressure).

### Table

Inner diameter of pipe 200 mm, total flow resistance 2.7 times delivery pressure
Inner diameter of pipe 240mm, total flow resistance 1.9 times delivery pressure
Inner diameter of pipe 300mm, total flow resistance 1.2 times delivery pressure
Inner diameter of pipe 400mm, total flow resistance 0.7 times delivery pressure

Flow resistance has obviously decreased already with an inner pipe diameter of 1.2 times the propeller diameter. This still reaches the other benefits of a loose pipe.

When the diameter of the pipe is double the diameter of the propeller, the flow resistance is already less than the effective pressure (original delivery pressure of 4,500 Pa). This also reaches the other benefits of a loose pipe.

### EXAMPLE 2

### USE OF THE APPARATUS OF THE INVENTION AS A COOLER

The apparatus of the invention has been tested as a cooler. The cooling power of the apparatus was 23 kW and energy consumption 1.1 kW. Thus the efficiency of cooling was 21 times the amount of energy used. The ambient conditions were: air temperature 17.5°C, air humidity 53%, water temperature 18.9°C. The apparatus tested was equipped with a 1.1 kW / 1,500 rpm motor, the efficiency of which was 77%, and a 7½" x 7" propeller (diameter 190 mm, rise 180 mm). Taking the propeller slip into account, the flow rate was approximately 3 m/s prior to the centrifugal vanes and output 60 Vs. The apparatus was equipped with four vanes. The basin measured 9m³. The apparatus was much simpler than traditional cooling towers, yet its efficiency was higher than that of traditional cooling towers.

### EXAMPLE 3

### EXAMPLES OF AERATION

The apparatus of the invention has been tested as an aerator in terms of efficiency. Experimentation was done with two apparatuses of the invention of different sizes.

The smaller aerator was equipped with a 5" x 4" (diameter 120 mm, rise 100 mm) propeller and a 0.18 kW / 1,500 rpm motor. The shaft output used was 140W and the motor's coefficient of efficiency was 50%. In an aerator of the prior art where only the propeller was rotating, the efficiency reached was 0.7kgO2/kWh.

The aerator of the invention, on the other hand, where all parts (2-6) rotated, had an efficiency of 1.5 kg02/kWh. The increase was significant (+114%). This is a very high performance rating, considering that in an aerator of such small size both the motor efficiency and propeller efficiency are very low. The aerator of the invention was equipped with eight vanes. The diameter of the rotating flange was the same as the diameter of the propeller.

The larger aerator was equipped with a 7½" x 7" (diameter 190 mm, rise 180 mm) propeller and a 1.1 kW / 1,500 rpm motor. The shaft output used was approximately 1.0 kW and the motor's coefficient of efficiency was 77%.

In an aerator of the prior art where only the propeller was rotating, the efficiency reached was 1.4kgO2/kWh.

The aerator of the invention, on the other hand, where all parts (2-6) rotated, had an efficiency of 2.0 kg02/kWh. The increase was significant (+43%). This is a high performance rating, considering that in an aerator of such small size the efficiency of the propeller is low. The aerator was equipped with four vanes. The diameter of the rotating flange was the same as the diameter of the propeller. The rotation speed of the aerator was adjusted with a frequency converter (network frequency 50 Hz). The highest efficiency was achieved in the area around 40 Hz, 2.3 kg 02 / kWh, making the efficiency nearly 15% higher than at 50 Hz.

The larger aerator was tested with rotating flanges of different sizes. The best results were achieved when the diameters of the propeller and the rotating flange were approximately the same. The size of the flange was changed at two-centimetre intervals. Particularly as the diameter of the flange increased to much larger than that of the propeller, the results deteriorated noticeably. Energy consumption increased, but output did not.

The latter aerator also ran with a suction pipe, decreasing energy consumption typically by 10%. Efficiency increased correspondingly by 5%. In addition to efficiency, the suction pipe has an important task in deeper basins or natural waters, making the water rotate all the way to the bottom in the basin.

An aerator of the invention where all parts (2-6) rotate may also be manufactured without vanes (5). An aerator may also be made so that the diameter of the rotating flange (3) is much smaller than the diameter of the propeller. However, this particularly in larger aerators, where the centrifugal force at the outer edge of the rotating flange easily becomes too high, decreases the aerator's efficiency and guides the water spray unnecessarily far away. The construction is non-contaminating due to centrifugal force, also with a smaller rotating flange and a stationary flange above it (7). The diameter of the stationary flange is approximately the same as the diameter of the propeller (6).

The previously described aerator had both a propeller (6) that lifted water from the bottom straight upwards and vanes (5) that pushed the water to the sides. These were connected by a rotating sleeve (4). This construction may be replaced by propeller vanes where the propeller vanes at the lower section lift water upwards and the said vanes bend ultimately outwards, thus forming centrifugal vanes and functioning as a propeller pump at first and a centrifugal pump later (8). In other words, an integrated propeller starts as a propeller pump at the bottom and ends as a centrifugal pump at the top (8).

The aerator mixes water effectively as it aerates. The speed of rotation in aeration may be decreased, ultimately ending the aeration. The water does, however, continue its rotation and mixes. Mixing may be done also so that the motor's direction of rotation is reversed. Now the propeller sucks water from above and pushes it down. However, in this case the water surface must be under the rotating vanes (otherwise these tend to pump water parallel to the surface away from the aerator and prevent the propeller pump from working). Mixing may be made more effective with a suction pipe.

## Claims

1. An apparatus suitable for cooling and/or condensation and/or aeration and/or mixing of water, **CHARACTERISED IN THAT** it comprises
a shaft (4),
a propeller (6) to suck water from below and feed it upwards, the said propeller (6) being surrounded by a pipe (24) through which water sucked by the propeller (6) can flow upwards, and the inner diameter of the said pipe (24) being 1.2 to 2.0 times larger than the diameter of the propeller (6),
a flange (3) to guide water to the sides, and the diameter of the flange (3) being the same as the diameter of the propeller (6), and
a motor (1) that rotates the propeller (6).

2. An apparatus of claim 1, WHEREIN the flange (3) and shaft (4) are rotating to guide water more effectively to the sides.

3. An apparatus of any of claims 2 - 4, WHEREIN there are vanes (5) connected to the rotating flange (3).

4. An apparatus of claim 1, WHEREIN there are under the rotating flange (3) and above the propeller (6) vanes/propeller (5) to guide water more effectively to the sides.

5. An apparatus of claim 1, WHEREIN there is an additional fan (13) above the motor (1) to bring dry air into the apparatus or discharge moist air from the apparatus.

6. An apparatus of any of claims 2 - 5, WHEREIN the distance of the propeller (6) from the rotating flange (3) is less than the diameter of the propeller (6).

7. An apparatus of any of claims 2 - 6, WHEREIN the apparatus is equipped with floats (35)

8. An apparatus of any of claims 2 - 7, WHEREIN the propeller has a reversible rotation direction.

9. The use of an apparatus of any of claims 1 - 7 as an aerator as a part of a process to pump processed water onwards and/or to the next tank and/or pipe.
